# EUROPEAN PATENT APPLICATION

(11) **EP 4 692 243 A1**
(43) Date of publication of application: **11.02.2026**
(21) Application number: 24778935.7
(22) Date of filing: 26.02.2024
(51) Int. Cl.: C08L 101/00, C08L 3/04, C08L 67/00, C08L 77/00, C08L 97/00

(54) **COMPOSITE RESIN COMPOSITION AND COMPOSITE RESIN MOLDED ARTICLE**

(30) Priority: 24.03.2023 JP 2023048527
(71) Applicant: Panasonic Intellectual Property Management Co., Ltd., Kadoma-shi, Osaka 571-0057 (JP)
(72) Inventor: FUKU, Ami, Kadoma-shi, Osaka 571-0057 (JP); TOYOTA, Kei, Kadoma-shi, Osaka 571-0057 (JP); NAGINO, Toshifumi, Kadoma-shi, Osaka 571-0057 (JP); SEKI, Ryouhei, Kadoma-shi, Osaka 571-0057 (JP)
(74) Representative: Novagraaf International SA
(86) International application number: PCT/JP2024/006811
(87) International publication number: WO 2024/202792

(57) **Abstract**

A composite resin composition is a composite resin composition including: a resin; and a biomass dispersed in the resin, in which the biomass contains an organic nitrogen, and the biomass is contained in a content of 10 mass% or more and 99 mass% or less with respect to 100 mass% of the entire composite resin composition.

## Description

### TECHNICAL FIELD

The present disclosure relates to a composite resin composition and a composite resin molded article containing biomass, and exhibiting excellent mechanical properties and excellent biodegradability.

### BACKGROUND ART

So-called "general-purpose plastics" such as polyethylene (PE), polypropylene (PP), polystyrene (PS), and polyvinyl chloride (PVC) are not only very inexpensive but also easy to mold, and have a weight as small as a fraction of that of metal or ceramics. Thus, general-purpose plastics are often used as materials of various daily commodities such as bags, various packaging, various containers, and sheets, and as materials for industrial components such as automobile components and electrical components, household electrical appliances, building supplies, daily necessities, and miscellaneous goods.

Under such circumstances, the amount of plastic waste after use is increasing year by year, and plastic waste, which is a substance having a property of being hardly decomposed, accumulates in the natural environment, which causes pollution problems such as destruction and pollution in the natural environment. In recent years, biodegradable plastics that are decomposed into water and carbon dioxide in the natural environment have been proposed as one of the measures to solve such various problems. It is expected that the use thereof will be expanded instead of general-purpose plastics using petroleum-based raw materials.

However, biodegradable plastics have disadvantages such as insufficient mechanical strength as compared with general-purpose plastics. Therefore, biodegradable plastics do not have sufficient properties required for materials used for machine products such as automobiles and various industrial products including electric/electronic/information products, and the application range thereof is currently limited.

In addition, the biodegradation rate of the biodegradable plastics is greatly affected by the environment. For example, in an environment with a small number of microorganisms, such as in the ocean, it takes significantly long time to completely decompose the biodegradable plastics, and the properties of biodegradability are not sufficiently utilized.

Further, even in biodegradable plastics, there are biomass-derived resins and petroleum-derived resins. From the viewpoint of suppressing carbon dioxide emission, it is required to reduce the amount of petroleum-derived resins used, among the above resins.

In order to solve such a problem, a biodegradation accelerator in which a cellulose nanofiber and a biomass are combined (see, for example, PTL 1), and a resin molded article in which an inorganic filler such as talc having a decomposition promoting effect is combined with a biodegradable plastic (see, for example, PTL 2) are disclosed.

### Citation List

### Patent Literature

PTL 1: Unexamined Japanese Patent Publication No. 2022-151892
PTL 2: Unexamined Japanese Patent Publication No. 2017-132967

### SUMMARY OF THE INVENTION

The biodegradation accelerator described in PTL 1 requires a step of preparing a cellulose nanofiber, and the amount of biomass added to a product is limited. In the resin molded article described in PTL 2, an inorganic filler having a specific gravity larger than that of a single resin is combined with a resin, and thus there is a problem that the specific gravity of the composite resin molded article increases.

The present disclosure has been made to solve the above conventional problems, and an object of the present disclosure is to provide a composite resin composition that promotes biodegradation even in the ocean or the soil while reducing the amount of petroleum-derived resins used.

A composite resin composition according to an aspect of the present disclosure is a composite resin composition including: a resin; and a biomass dispersed in the resin, in which the biomass contains an organic nitrogen, and the biomass is contained in a content of 10 mass% or more and 99 mass% or less with respect to 100 mass% of the entire composite resin composition.

A composite resin molded article according to an aspect of the present disclosure is obtained by molding the composite resin composition.

The composite resin composition according to the present disclosure can reduce the amount of petroleum-derived resins used and promote biodegradation even in the ocean or the soil.

### BRIEF DESCRIPTION OF THE DRAWINGS

Fig. 1 is a schematic cross-sectional view illustrating the cross-sectional structure of a composite resin molded article according to the first exemplary embodiment.
Fig. 2 is a schematic diagram of a production process for the composite resin composition and the molded article thereof according to the first exemplary embodiment.
Fig. 3 is a diagram showing configurations and measurement results of composite resin molded articles in examples and comparative examples in the exemplary embodiment.

### DESCRIPTION OF EMBODIMENT

A composite resin composition according to a first aspect is a composite resin composition including: a resin; and a biomass dispersed in the resin, in which the biomass contains an organic nitrogen, and the biomass is contained in a content of 10 mass% or more and 99 mass% or less with respect to 100 mass% of the entire composite resin composition.

The composite resin composition according to the first aspect of the present disclosure can realize a composite resin molded article having high biodegradability and a high biomass proportion in the raw materials, in addition to a high elastic modulus, as compared with the single resin.

A composite resin composition according to a second aspect is the composite resin composition in the first aspect, in which the resin may be at least one of polyhydroxyalkanoic acid, polybutylene succinate, polylactic acid, polybutylene adipate-co-terephthalate, polycaprolactone, polyamide, modified starch, and derivatives thereof.

A composite resin composition according to a third aspect is the composite resin composition in the first or second aspect, in which the resin may be a thermoplastic biodegradable resin having a flexural modulus of 100 MPa or more.

A composite resin composition according to a fourth aspect is the composite resin composition in any one of the first to third aspects, in which the biomass may have a C/N ratio of 120 or less, the C/N ratio being an element ratio between carbon C and nitrogen N.

A composite resin composition according to a fifth aspect is the composite resin composition in any one of the first to fourth aspects, in which the biomass may have a cellulose/lignin ratio of 2.5 or more.

A composite resin composition according to a sixth aspect is the composite resin composition in any one of the first to fifth aspects, in which the biomass may be a waste mushroom bed used for mushroom cultivation.

A composite resin molded article according to a seventh aspect is obtained by molding the composite resin composition in any one of the first to sixth aspects.

A composite resin molded article according to an eighth aspect may have, in the seventh aspect, a water absorption percentage of 5% or more after 168 hours in accordance with a measurement method specified in JIS K7209:2000 when a test piece of JIS K7139 Type A1 is used.

Hereinafter, the composite resin composition and the composite resin molded article according to the exemplary embodiment and the method for producing the same will be described with reference to the accompanying drawings. In the following description, the same components are denoted by the same reference marks, and the description thereof is appropriately omitted.

### (First exemplary embodiment)

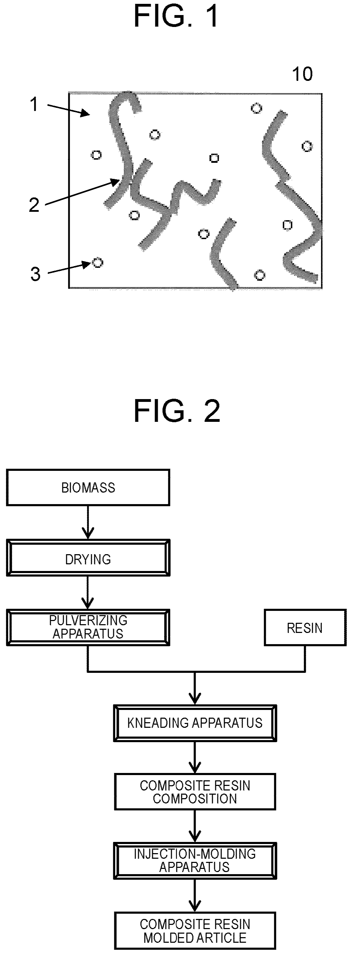

Fig. 1 is a schematic cross-sectional view illustrating the cross-sectional structure of composite resin composition 10 according to the first exemplary embodiment.

Composite resin composition 10 according to the first exemplary embodiment is formed of a melt-kneaded product containing resin 1, biomass 2, and as necessary, additive 3. In composite resin composition 10, as illustrated in the schematic cross-sectional view of Fig. 1, biomass 2 and additive 3 are dispersed in resin 1.

At least one biomass 2 is exposed on the surface of the composite resin molded article.

Composite resin composition 10 can realize a composite resin molded article having at least one biomass 2 exposed on the surface of the composite resin molded article, and having a high elastic modulus, high water absorbency, and excellent biodegradability in a humid environment.

Hereinafter, each member constituting composite resin composition 10 will be described.

### <Resin>

In the first exemplary embodiment, resin 1 is preferably a biodegradable plastic containing, for example, any one selected from the group consisting of polyhydroxy acids such as polylactic acid, polyglycolic acid, and polycaprolactone, polyhydroxyalkanoates (polyhydroxyalkanoic acid: PHA) such as polyhydroxybutyrate and polyhydroxyvalerate, polyester-based resins including polyalkylene dicarboxylates such as polyalkylene dicarboxylate, polybutylene adipate-co-terephthalate, polyethylene succinate, and polybutylene succinate, polyamide, and modified starches. To ensure good moldability and mechanical properties, a thermoplastic resin having a flexural modulus of 100 MPa or more is preferable, and the above resin may be used alone or in combination of two or more thereof. Resin 1 is not limited to the above materials as long as it has biodegradability.

In the first exemplary embodiment, the term "biodegradable plastic" refers to "resin that has a function similar to that of a conventional petroleum-derived resin at the time of use, and is finally decomposed into water and carbon dioxide by microorganisms in the soil or the ocean in nature after use". Specific examples thereof include polyhydroxyalkanoic acids such as polyhydroxybutyrate and polyhydroxyvalerate; polyhydroxy acids such as polylactic acid, polyglycolic acid, and polycaprolactone; polyester-based resins including polyalkylene dicarboxylates such as polybutylene adipate-co-terephthalate, polyethylene succinate, and polybutylene succinate; polyamides; modified starches; and derivatives thereof. Examples of the polyester-based resin include, in addition to a homopolymer of a polyester-based monomer, a copolymer of polyester-based monomers such as poly(3-hydroxybutyrate-co-3-hydroxyvalerate), and a copolymer of a polyester-based monomer and another copolymerizable monomer. These polyester-based resins may be used alone or in combination of two or more thereof.

### <Additive>

Next, additive 3 will be described. Additive 3 is not indispensable in the composite resin composition according to the first exemplary embodiment, and may be used as necessary for the purpose of improving affinity between resin 1 and biomass 2, or the like.

### <Biomass>

Next, biomass 2 will be described. Biomass 2 contained in the composite resin composition according to the exemplary embodiment is used, the first main purpose of which is that: in the composite resin composition, the organic nitrogen contained in the biomass is absorbed as a nutrient source for microorganisms to activate proliferation and enzyme production of the microorganisms, thereby promoting biodegradation in the soil or the ocean. For this purpose, the biomass is preferably wood flour, waste mushroom bed for mushroom cultivation, silk, hemp, wool, okara, coffee grounds, tea leaf waste, tea grounds, barley tea grounds, bean skins, citrus skins, beer pomace, juice pomace, bran, rice bran, soybean pomace, or rapeseed pomace, each containing an organic nitrogen. The organic nitrogen refers to a case where nitrogen is present in the existence form of a protein, an amino acid, or the like. In addition to the organic nitrogen, examples of the existence form of nitrogen include: an ammonia nitrogen including an ammonium salt; and a nitrate nitrogen in which nitrogen is present in the form of nitrogen oxide such as a nitrate ion. Among them, from the viewpoint of promoting biodegradation, the biomass preferably has a C/N ratio of 120 or less, the C/N ratio being an element ratio between carbon C and nitrogen N. Specific examples thereof include waste mushroom bed for mushroom cultivation, silk, wool, okara, coffee grounds, tea leaf waste, tea grounds, bean skins, citrus skins, potato skins, beer pomace, juice pomace, bran, rice bran, soybean pomace, or rapeseed pomace. The C/N ratio of the biomass can be evaluated by elemental analysis or the like.

The second purpose of adding the biomass is to improve dimensional stability by improving mechanical properties and lowering the linear expansion coefficient. For this purpose, biomass 2 preferably has a higher elastic modulus than resin 1. Specific examples thereof include wood flour, waste mushroom bed for mushroom cultivation, silk, hemp, and wool. Furthermore, among them, from the viewpoint of promoting biodegradation, biomass 2 preferably has a small content of lignin, which is hardly degraded, and preferably has a cellulose/lignin ratio of 2.5 or more. Specific examples thereof include waste mushroom bed for mushroom cultivation, silk, hemp, and wool. The cellulose/lignin ratio of the biomass can be evaluated by fiber analysis such as a detergent method.

When a raw material containing a saccharide as biomass 2 is used, the saccharide derived from biomass 2 is carbonized in the production process of composite resin composition 10, and thereby the obtained composite resin composition 10 can sustainably release a natural aromatic component. Examples of the biomass containing a saccharide include waste mushroom bed for mushroom cultivation, okara, coffee grounds, citrus skins, beer pomace, juice pomace, bran, and rice bran.

Among them, waste mushroom bed used for mushroom cultivation is particularly preferable from the viewpoint of availability and resource circulation. Biomass 2 is not limited to the above materials as long as it contains an organic nitrogen and can improve mechanical properties.

The content of biomass 2 is preferably 10 mass% or more and 99 mass% or less with respect to 100 mass% of the composite resin composition. When the content of biomass 2 is less than 10 mass%, biomasses 2 are less likely to have a contact point with each other inside the composite resin composition, and thus sufficient water absorbency is not attained. On the other hand, when the content of biomass 2 is more than 99 mass%, the proportion of resin 1 decreases, so that the effect of bonding biomass 2 to each other is lost and moldability is thus deteriorated. From the viewpoint of water absorbency and moldability, the content of biomass 2 is more preferably 30 mass% or more and 70 mass% or less.

The form of biomass 2 in the composite resin molded article obtained by molding the composite resin composition will be described. When the bonding interface between biomass 2 and resin 1 is large, the area of resin 1 that can come into contact with microorganisms increases when biomass 2 absorbs water and expands, and therefore the specific surface area of biomass 2 is preferably large. On the other hand, in order to improve the water absorbency of the composite resin molded article, biomass 2 is preferably exposed on the surface of the composite resin molded article. Since biomass 2 is exposed on the surface of the composite resin molded article, water is absorbed from the exposed portion, and water is absorbed into the inside of the composite resin molded article by the capillary phenomenon of fibers.

Next, the existence state of biomass 2 in the composite resin molded article will be described. The composite resin molded article includes: a surface layer; and an inner layer located on the inner side of the surface layer. By adjusting the molding conditions and increasing the shrinkage rate when the composite resin composition is molded, biomass 2 can be segregated in the vicinity of the surface of the composite resin molded article. As a result, biomass 2 is present more in the surface layer than in the inner layer of the composite resin molded article. In addition, seen as a molded article, when biomass 2 is present in a large amount in the surface layer of the composite resin molded article, the elastic modulus of the outer side thereof becomes higher, so that the rigidity of the entire molded article increases. Accordingly, the structure in which biomass 2 is segregated in the vicinity of the surface of the molded article also leads to improved rigidity. The segregation of biomass 2 in the vicinity of the surface can be evaluated by SEM observation of the cross section of the composite resin molded article, or the like.

Next, characteristics of biomass 2 will be described. The types of resin 1 and biomass 2 are as described above. However, when biomass 2 is too soft, that is, has a small elastic modulus, with respect to resin 1, the composite resin molded article has a small elastic modulus as a whole, resulting in decreased strength. On the other hand, when biomass 2 is too hard, that is, has a large elastic modulus, with respect to resin 1, shock waves generated at the time of impact are not propagated, and the impact is absorbed at the interface between resin 1 and biomass 2. For this reason, cracking and crazing are likely to occur in the vicinity of the interface, resulting in reduced impact strength. Therefore, in the relationship of elastic modulus between resin 1 and biomass 2, it is preferable that the elastic modulus of biomass 2 is higher, and the difference thereof is as small as possible. The optimum relationship is calculated from simulation results, and the difference in elastic modulus between resin 1 and biomass 2 is preferably within 20 GPa.

Further, such biomass 2 may be surface-treated for the purpose of improving adhesion to resin 1 or dispersibility in the composite resin composition, or the like. However, when the water absorbency of biomass 2 is impaired by surface treatment, it is preferable not to perform surface treatment in advance.

### <Method for producing composite resin composition>

Next, the method for producing the composite resin composition will be described. Fig. 2 is a flowchart illustrating a production process for the composite resin composition in the exemplary embodiment.
(1) Resin 1, biomass 2, and additive 3 are charged into a melt-kneading apparatus, and are melt-kneaded in the apparatus. As a result, resin 1 is melted, and biomass 2 and additive 3 are dispersed in molten resin 1. At the same time, the shearing action of the apparatus promotes defibration of aggregates of biomass 2, and biomass 2 can be finely dispersed in resin 1.

Conventionally, when natural fibers and the like are combined with a resin, fibers that have been defibrated in advance by a pretreatment such as wet dispersion have been used.

On the other hand, in the production process of a composite resin composition in the exemplary embodiment, a melt-kneading treatment (all-dry method) is performed together with resin 1, additive 3 functioning as a dispersant, and the like, without performing a pretreatment by wet dispersion for the purpose of defibrating biomass 2. In this method, since the wet dispersion treatment of biomass is not performed, swelling of biomass 2 in the production process is suppressed, and the hygroscopic expansion coefficient of biomass 2 in resin 1 of the composite resin composition can be improved. In addition, when biomass 2 is dried in advance, or during kneading, to adjust the water content to 5% or less, the expansion coefficient at water absorption can be further improved in resin 1.

In order to prepare biomass 2 of the exemplary embodiment by the all-dry method, it is preferable to apply high shear stress during kneading. Specific examples of the kneading method include a uniaxial kneader, a biaxial kneader, a roll kneader, a Banbury mixer, and a combination thereof. From the viewpoint of easy application of high shear and high mass productivity, a continuous biaxial kneader and a continuous roll kneader are particularly preferable. A kneading method other than the above may be used as long as high shear stress can be applied.

### <Method for producing composite resin molded article>

(2) The composite resin composition extruded from the melt-kneading apparatus is prepared in a pellet form through a cutting process such as a pelletizer. The pelletizing method includes a method of performing pelletization immediately after melting the resin, examples of which include an air hot cut method, an underwater hot cut method, and a strand cut method. Alternatively, there is also a pulverization method in which a molded article or a sheet is once molded and then pulverized and cut.
(3) By injection-molding the pellets, an injection-molded article as a composite resin molded article can be prepared. Since biomass 2 in the pellet is mixed with resin 1 as described above, an injection-molded article excellent in elastic modulus, impact resistance, and appearance can be obtained.

Composite resin composition 10 according to an aspect of the present disclosure can be molded into a bowl shape to be used as a plant growth pot. The plant growth pot formed of the composite resin composition, having high biodegradability, is decomposed without suppressing the growth of plants, so that the number of man-hours for replanting them can be reduced. The composite resin molded article is not limited to the form of a plant growth pot as long as it is used for applications requiring biodegradability.

Hereinafter, examples and comparative examples in experiments performed by the inventors will be described.

### (Example 1)

In Example 1, a shiitake waste mushroom bed-combined polylactic acid resin molded article was produced by the following production method.

As the biomass, a waste mushroom bed used for shiitake cultivation was used. The shiitake waste mushroom bed was pulverized into a particle diameter φ of 3 mm or less with a universal pulverizer (SF-1 from SANRIKI SEISAKUSHO. Co., Ltd.). As the resin, a polylactic acid (manufactured by UNITIKA LTD., trade name: TE-2000) was used. The shiitake waste mushroom bed, which had been dried in advance and adjusted to have a water content of 5% or less, and the polylactic acid were weighed at 45 : 55 in terms of weight ratio, and dry-blended.

Then, the dry blend was melt-kneaded with a biaxial kneader (KRC kneader, manufactured by Kurimoto, Ltd.). The screw was of a medium shear type. The melt-kneading conditions included a resin temperature of 200°C and a rotation speed of 50 min⁻¹. The composite resin composition discharged from the biaxial kneader was hot-cut to prepare pellets of the shiitake waste mushroom bed-combined polylactic acid resin.

A test piece of the shiitake waste mushroom bed-combined polylactic acid resin molded article was prepared using the prepared pellets of the shiitake waste mushroom bed-combined polylactic acid with an injection-molding machine (180AD, manufactured by The Japan Steel Works, Ltd.). The production conditions of the test piece included a resin temperature of 200°C, a mold temperature of 30°C, an injection speed of 100 mm/s, and a holding pressure of 100 Pa. The shape of the test piece was changed according to the evaluation items described below, and a dumbbell having a size of the dumbbell-shaped tensile test piece No. A1 specified in JIS K7139 was prepared for measuring the elastic modulus. The obtained test piece of the shiitake waste mushroom bed-combined polylactic acid resin molded article was evaluated by the following method.

### (Elastic modulus of composite resin molded article)

A bending test was performed using the obtained No. A1 dumbbell-shaped test piece. Here, as the method for evaluating the elastic modulus, a numerical value of less than 3.8 GPa was rated as C; 3.8 GPa or more and less than 6.0 GPa was rated as B; and 6.0 GPa or more was rated as A.

The test piece had an elastic modulus of 6.4 GPa, and was rated as A.

### (Evaluation of C/N ratio of biomass)

The biomass used as a raw material of the composite resin composition was analyzed for the C/N ratio thereof. The C/N ratio, the element ratio between carbon C and nitrogen N, was analyzed using a microcoder (JM 11, manufactured by J-Science). Herein, as the method for evaluating the C/N ratio, a numerical value of 120 or less was rated as A; and larger than 120 was rated as C.

The shiitake waste mushroom bed had a C/N ratio of 62, and was rated as A.

### (Evaluation of cellulose/lignin ratio of biomass)

The biomass used as a raw material of the composite resin composition was analyzed for the cellulose/lignin ratio thereof. The cellulose/lignin ratio was analyzed by the detergent analysis method. Herein, as the method for evaluating the cellulose/lignin ratio, a numerical value of 2.5 or more was rated as A; and less than 2.5 was rated as C.

The shiitake waste mushroom bed had a cellulose/lignin ratio of 4.0, and was rated as A.

### (Evaluation of water absorption percentage of composite resin molded article)

Using the obtained No. A1 dumbbell-shaped test piece, the water absorption percentage was measured by a method in accordance with JIS K7209:2000. Specifically, the test piece was dried in a dryer at 50°C for 24 hours, and the weight of the test piece was measured. Then, the test piece was immersed in distilled water at 23°C for 168 hours, the moisture on the surface was then wiped off, and the weight of the test piece was measured. As the method for evaluating the water absorption percentage, a numerical value of 5% or more was rated as A; 3% or more and less than 5% was rated as B; and less than 3% was rated as C.

The test piece had a water absorption percentage of 5.2%, and was rated as A.

### (Evaluation of biodegradability of composite resin molded article)

A biodegradation test was performed using a bar-shaped test piece formed of the obtained composite resin molded article by a method in accordance with JIS K 6953-1:2011. Specifically, into a plastic container, 60 mL of a compost planting source (YK-12, from Yawata Corporation) was placed, a bar-shaped test piece having a height of 20 mm, a width of 10 mm, and a thickness of 4 mm, the weight of which was measured in advance, was embedded in the planting source, and held at a temperature of 58°C and a water content of 50%, and then the weight loss after 1 month was evaluated. As the method for evaluating the biodegradation percentage, a numerical value of 10% or more was rated as A; and less than 10% was rated as C.

The test piece had a biodegradation percentage of 15.6%, and was rated as A.

### (Comparative Example 1)

In Comparative Example 1, a polylactic acid resin molded article was prepared in the same process conditions as in Example 1 except that a polylactic acid was used as a raw material without combining a biomass. The evaluation was performed in the same manner as in Example 1.

### (Comparative Example 2)

In Comparative Example 2, pellets of a softwood pulp-combined polylactic acid resin and a composite resin molded article were prepared in the same material conditions and process conditions as in Example 1, except that softwood pulp was used as the biomass instead of the shiitake waste mushroom bed. The evaluation was performed in the same manner as in Example 1.

### (Comparative Example 3)

In Comparative Example 3, pellets of a cedar wood flour-combined polylactic acid resin and a composite resin molded article were prepared in the same material conditions and process conditions as in Example 1, except that cedar wood flour was used as the biomass instead of the shiitake waste mushroom bed. The evaluation was performed in the same manner as in Example 1.

### (Comparative Example 4)

In Comparative Example 4, pellets of a coffee grounds-combined polylactic acid resin and a composite resin molded article were prepared in the same material conditions and process conditions as in Example 1, except that coffee grounds were used as the biomass instead of the shiitake waste mushroom bed. The evaluation was performed in the same manner as in Example 1.

### (Example 2)

In Example 2, pellets of a shiitake waste mushroom bed-combined polylactic acid resin and a composite resin molded article were prepared in the same material conditions and process conditions as in Example 1, except that a shiitake waste mushroom bed that had not been dried in advance was used as the biomass. The evaluation was performed in the same manner as in Example 1.

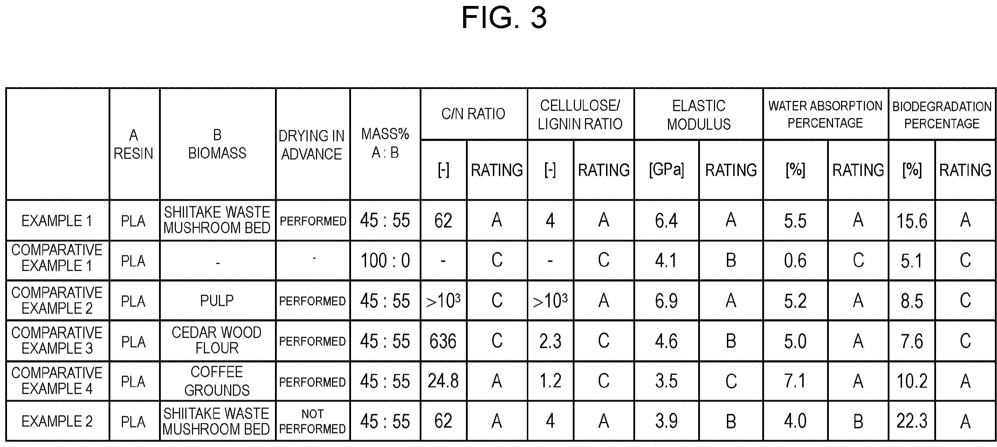

Fig. 3 shows the configurations and measurement results of the composite resin molded articles in Examples 1 and 2 and Comparative Examples 1 to 4.

As is apparent from Fig. 3, in Example 1, in which a polylactic acid as the resin is combined with a shiitake waste mushroom bed as the biomass, the elastic modulus is also as high as 6.4 GPa. In addition, due to the water absorbency of the shiitake waste mushroom bed and the organic nitrogen contained in the shiitake waste mushroom bed, the biodegradation rate was also improved as compared with the polylactic acid resin molded article of Comparative Example 1. It was confirmed that when the combined biomass has a high cellulose/lignin ratio and contains an organic nitrogen, and the biomass is exposed on the surface of the composite resin molded article, a composite resin with a high elastic modulus and high biodegradability is obtained.

In Comparative Example 2, in which softwood pulp was combined as the biomass, no organic nitrogen is contained. Therefore, as compared with Example 1, the biodegradation rate was reduced to 5.1%, and rated as C.

In Comparative Example 3, in which cedar wood flour was combined as the biomass, organic nitrogen is contained in a small amount and lignin is contained in a high ratio. Therefore, as compared with Example 1, the biodegradation rate was reduced to 7.6%, and rated as C.

In Comparative Example 4, in which coffee grounds were combined as the biomass, the coffee grounds contain oil in a large amount and have a low elastic modulus. Therefore, as compared with Example 1, the elastic modulus was reduced to 3.5 GPa, and rated as C.

In Example 2, a shiitake waste mushroom bed was combined without drying in advance. Therefore, as compared with Example 1, the elastic modulus was reduced to 3.9 GPa, and rated as B. Furthermore, the water absorption percentage was also decreased to 4.0%, and rated as B. This is presumably because the resin was hydrolyzed during kneading and molding.

From the above evaluation, it has been confirmed that when a biomass containing an organic nitrogen and having a high cellulose/lignin ratio and a biodegradable plastic are used and the biomass is dried in advance, a composite resin molded article having a high elastic modulus and high biodegradability can be obtained.

Note that the present disclosure includes an appropriate combination of any exemplary embodiment and/or example among the various exemplary embodiments and/or examples described above, and effects of the respective exemplary embodiments and/or examples can be achieved.

### INDUSTRIAL APPLICABILITY

With the composite resin composition according to the present disclosure, it is possible to provide a molded article having mechanical strength and biodegradability superior to those of conventional biodegradable plastics. Since the properties of the resin can be improved by the present disclosure, the composite resin composition can be used as an alternative to petroleum-derived general-purpose plastics. Therefore, the environmental load of various industrial products or daily commodities made of petroleum-derived general-purpose plastics can be significantly reduced. Further, the composite resin composition can be used for packaging materials, daily necessities, housings for household electric appliances, building materials, and the like.

### REFERENCE MARKS IN THE DRAWINGS

- 1: resin
- 2: biomass
- 3: additive
- 10: composite resin composition

## Claims

1. A composite resin composition comprising: a resin; and a biomass dispersed in the resin, wherein
the biomass contains an organic nitrogen, and
the biomass is contained in a content of 10 mass% or more and 99 mass% or less with respect to 100 mass% of the entire composite resin composition.

2. The composite resin composition according to Claim 1, wherein the resin contains at least one of polyhydroxyalkanoic acid, polybutylene succinate, polylactic acid, polybutylene adipate-co-terephthalate, polycaprolactone, polyamide, modified starch, and derivatives thereof.

3. The composite resin composition according to Claim 1, wherein the resin is a thermoplastic biodegradable resin having a flexural modulus of 100 MPa or more.

4. The composite resin composition according to Claim 1, wherein the biomass has a C/N ratio of 120 or less, the C/N ratio being an element ratio between carbon C and nitrogen N.

5. The composite resin composition according to Claim 1, wherein the biomass has a cellulose/lignin ratio of 2.5 or more.

6. The composite resin composition according to Claim 1, wherein the biomass is a waste mushroom bed used for mushroom cultivation.

7. A composite resin molded article obtained by molding the composite resin composition according to any one of Claims 1 to 6.

8. The composite resin molded article according to Claim 7, wherein the composite resin molded article has a water absorption percentage of 5% or more after 168 hours in accordance with a measurement method specified in JIS K7209:2000 when a test piece of JIS K7139 Type A1 is used.
